# EUROPEAN PATENT APPLICATION

(11) **EP 1 115 073 A2**
(43) Date of publication of application: **11.07.2001**
(21) Application number: 00106448.4
(22) Date of filing: 24.03.2000
(51) Int. Cl.: G06F 17/60

(54) **Method and apparatus for conducting online survey**

(30) Priority: 06.01.2000 KR 0000407; 12.01.2000 KR 0001279
(71) Applicant: Hee Jeoung Park of Mido Apt. 302-1302, Seoul (KR)
(72) Inventor: Hee Jeoung Park, Seoul (KR)
(74) Representative: Turi, Michael, Dipl.-Phys.

(57) **Abstract**

A method capable of conducting an online survey over a network comprises the steps of transmitting a plurality of exemplary inquiries to a remote processing system by a survey Web server; allowing the remote processing system to manipulate the exemplary inquiries, thereby generating a document including at least one inquiry to be constructed; permitting the remote processing system to determine requirements on surveyees depending on contents of the document, to thereby at least one remote subscriber among a number of remote subscribers be selected as at least one surveyee; and persuading at least one surveyee to respond to the document.

## Description

The present invention relates to a method and apparatus for conducting online survey; and, more particularly, to a method and apparatus capable of improving a response rate from survey participants in an online survey.

An internet comprises a vast number of computers and computer networks that are interconnected with each other through communication links. The interconnected computers exchange information by using various services, such as electronic mail, Gopher and the World Wide Web (WWW). The WWW service allows a server computer system, i.e., Web server or Web site to send graphical Web pages of information to a remote client computer system in such a way that the remote client computer system can display the Web pages. Each resource, e.g., computer or Web page of the WWW is uniquely identifiable by a Uniform Resource Locater (URL). To view a specific Web page, a client computer system specifies the Web page in a request, e.g., a HyperText Transfer Protocol (HTTP) request to the URL, wherein the request is forwarded to the Web server that supports the Web page. When the Web server receives the request, it sends the Web page to the client computer system. When the client computer system receives the Web page, it typically displays the Web page by using a browser. The browser is a special-purpose application program that effects the requesting of Web pages and the displaying of Web pages.

Currently, Web pages are typically defined by using HyperText Makeup Language (HTML), Dynamic HTML, Java Scripts, CGI and so on. The HTML provides a standard set of tags that define how a Web page is to be displayed. At the request of a user to display a Web page, the browser sends a request to the Web server to transfer to the client computer system an HTML document that defines the Web page. When the requested HTML document is received by the client computer system, the browser displays the Web page as defined by the HTML document. The HTML document contains various tags that control the displaying of text, graphics, controls and other features. The HTML document may contain URLs of other Web pages available on that Web server or other Web servers.

The WWW is especially conducive to conducting online survey. Many Web servers have been developed through which subscribers or clients can find out information about public opinions or behaviors. A conventional Web server for conducting online survey may provide an electronic version of a catalog that lists formalized inquiries available. A surveyor, i.e., a subscriber who would like to gather opinion of the public to some subject, may browse through the catalog by using a browser and select various inquiries that are to be surveyed. When the surveyor has completed selecting the inquiries to be surveyed, the Web server then provides the inquiries randomly to a large number of subscribers. In other words, the Web server disperses the inquiries without sampling a group of subscribers who are subject to respond to the inquiries or, if any, without obtaining prior consent from the subscribers. Consequently, the conventional online survey results in a low response rate and a poor reliability.

It is, therefore, an object of the present invention to provide a method and apparatus capable of enhancing the rate of response from the survey participants in an online survey and improving the reliability of the survey result.

In accordance with an aspect of the present invention, there is provided a method for conducting an online survey over a network, comprising the steps of:
transmitting a plurality of exemplary inquiries to a remote processing system;
allowing the remote processing system to manipulate said plurality of exemplary inquiries, thereby generating a document including at least one inquiry;
permitting the remote processing system to determine requirements on surveyees depending on contents of the document , to thereby at least one remote subscriber among a number of remote subscribers be selected as at least one surveyee; and
persuading said at least one surveyee to respond to the document.

The above and other objects and features of the present invention will become apparent from the following description of preferred embodiments given in conjunction with the accompanying drawings, in which:
Fig. 1 represents a block diagram for a survey Web server connected to a number of subscribers via an internet in accordance with the present invention;
Figs. 2A and 2B show a flow chart illustrating a routine in which the Web server allows a surveyor to manipulate exemplary inquiries to be asked and to extract surveyees in accordance with the present invention;
Figs. 3A and 3B show another flow chart illustrating a routine in which the Web server allows a surveyor to manipulate exemplary inquiries to be asked and to extract surveyees in accordance with the present invention; and
Fig. 4 is a flow chart illustrating a routine in which the Web server persuades surveyees to respond to the inquiries.

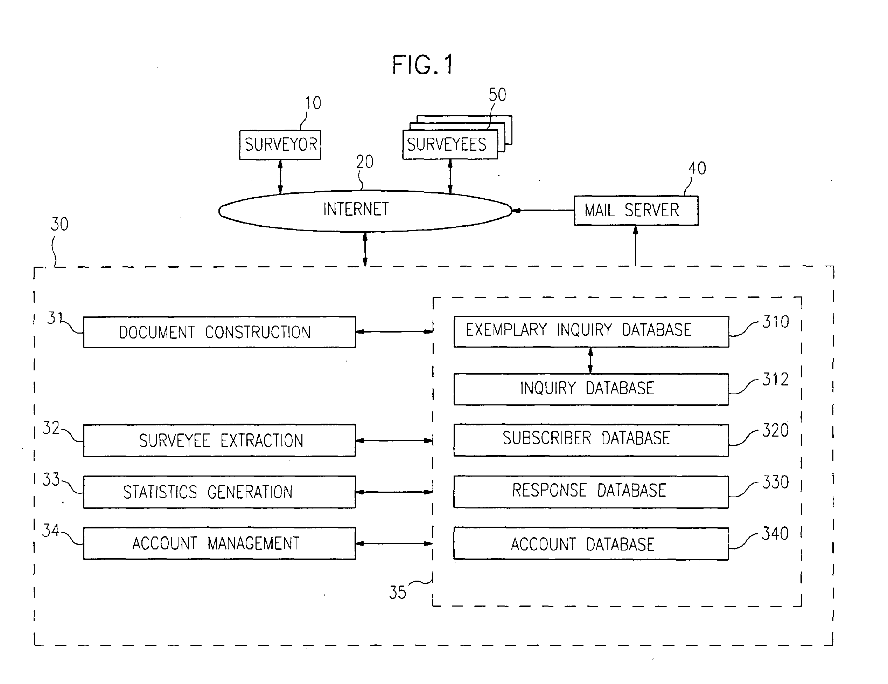

Referring to Fig. 1, there is illustrated a block diagram for a survey Web server 30 connected to a number of subscribers implemented via an internet 20 in accordance with the present invention. It is assumed for illustrative purpose that the subscribers are classified into a surveyor 10 and a plurality of surveyees 50. Each subscriber includes and executes a Web browser software application, which allows each subscriber to have an access to Hypertext Markup Language (HTML) Web pages and other data on various Web servers, such as the survey Web server 30.

The survey Web server 30 includes a document construction block 31, a surveyee extraction block 32, a statistics generation block 33, an account management block 34 and a database 35. The database 35 has an exemplary inquiry database 310, an inquiry database 312, a subscriber database 320, a response database 330 and an account database 340. The exemplary inquiry database 310 and the inquiry database 312 are connected to each other.

The document construction block 31 allows the surveyor 10 to prepare a survey document containing at least one inquiry based on the exemplary inquiry database 310. In other words, the document construction block 31 eases the surveyor 10 of the burden and hardship of constructing the whole survey document from the bottom as well as ensures the surveyor of using fully qualified sets of fine inquires. The document construction block 31 enables the surveyor 10 to insert any number of any kind of inquiries at his own disposal as well as to edit the given exemplary inquiries, thereby yielding a completely customized survey document fully conforming to the surveyor's purpose.

If a subscriber, i.e., the surveyor 10, accesses the survey Web server 30 for the purpose of sending out the survey document to other subscribers, the document construction block 31 sends a list of categories to the surveyor 10. Each category of the exemplary inquiry database 310 has at least one exemplary inquiry so that the surveyor 10 may select and modify at least one exemplary inquiry to generate at least one inquiry. If necessary, other categories may also be selected or one or more inquiries may be created by the surveyor 10 himself without referring to any inquiries in the exemplary inquiry database 310.

The exemplary inquiry database 310 stores a plurality of exemplary inquiries. The exemplary inquiries are preferably classified into a number of categories, for example, politics, economics, sports, education, and so on. If necessary, the categories may be hierarchic in such a way that the categories are divided into multiple stages of subcategories.

A response type for each exemplary inquiry can be selected by the surveyor 10. Specifically, each exemplary inquiry may be responded by allowing each surveyee to select one or more exemplary solutions, but one solution may be required to be written.

The inquiry database 312 stores at least one inquiry which may be collected, modified or created by the surveyor 10. Preferably, each document which has at least one inquiry corresponds to one surveyor 10. A response commission may be assigned to each document in accordance with the present invention, wherein the response commission will be given to a respondent as incentive for responding to the document. The response commission may be subdivided on an inquiry basis.

The surveyee extraction block 32 extracts a number of subscribers as surveyees for the document to be surveyed based on the information in the subscriber database 320. Therefore, a selection of the surveyees depends on the contents of the document to be surveyed. The subscriber database 320 stores information on subscribers. The information on subscribers is itemized with, for example, sex, age, occupation, income, hobby, residence, and so on. If the surveyees for the document are selected among the subscribers, the surveyee extraction block 32 generates a surveyee flag for each selected surveyee in order to distinguish the surveyees from the other subscribers. If necessary, the subscriber database 320 has an additional buffer for storing extra groups, wherein the members in each extra group may not be subscribers for the survey Web server 30, but all the members in each extra group have been defined by one or more members in each extra group in advance. For example, the extra groups include clubs, unions, cliques and so on.

In the meantime, the mail server 40 transmits a survey mail to the selected surveyees through the internet 20 so as to inform the surveyees of the existence of the document to be surveyed. The document itself, however, is preferably not allowed to be transmitted by the mail server 40. The mail provides the surveyees with the information as to not only the purpose, the response fee, the surveyor and so on but also a few sample inquiries contained in the survey document thereby enabling the surveyee to anticipate what the survey would look like. After receiving the survey mail, the surveyees 50 are suggested to click a button on the Web page in order to download the document from the document construction block 31 in the survey Web server 30 through the internet 20.

The statistics generation block 33 collects responses from survey respondents, i.e., subscribers who respond to the document sent to be surveyed, to generate a result based on a statistical analysis on the responses. Whenever each surveyee responds to the document to be surveyed, the statistics generation block 33 updates the statistical result. The response database 330 stores the updated statistical result for each document to be surveyed. After the statistics generation block 33 transmits a last updated statistical result to the surveyor 10, the survey process is terminated.

It is natural that the statistical result should not include direct information on the response from each surveyee. In other words, the surveyor 10 won't know how each surveyee responds to the document as well as the identities of the surveyees.

The account management block 34 manages to keep cyber accounts for the subscribers. One cyber account is preferably assigned to each subscriber in the account database 340. The cyber accounts are used to give the respondents the response commission as incentive for responding to the document to be surveyed in accordance with the present invention.

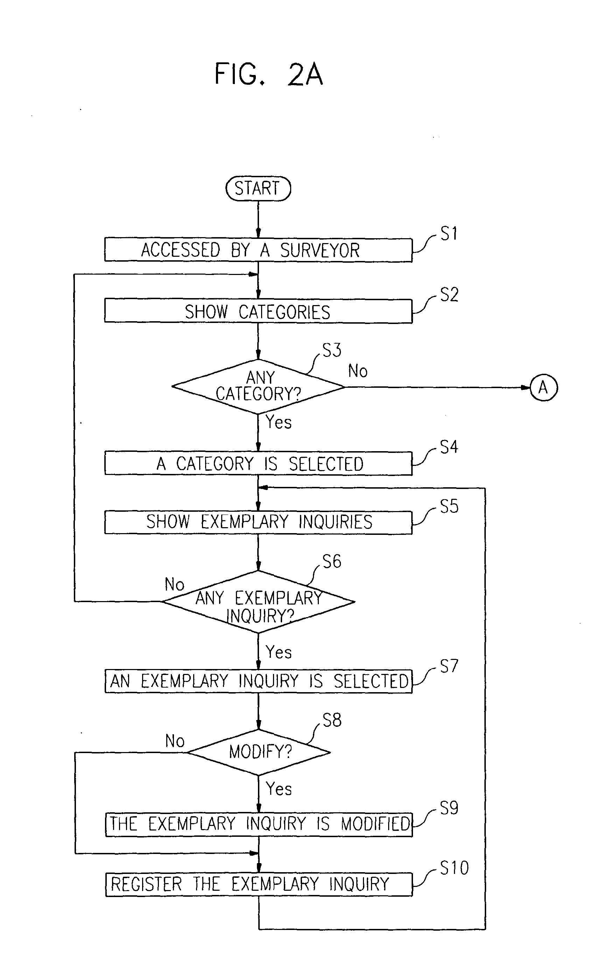

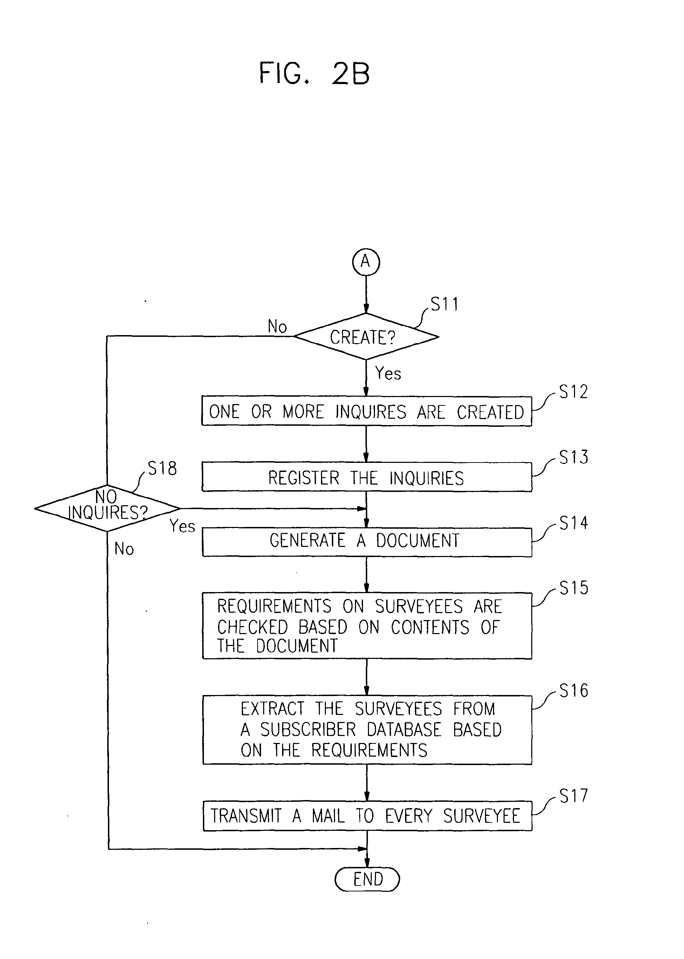

Referring to Figs. 2A and 2B, there shows a flow chart illustrating a routine in which the Web server allows a surveyor 10 to select exemplary inquiries to be asked and to extract surveyees based on the selected exemplary inquiries, wherein the surveyor 10 represents a subscriber who wants to make a survey of other remote subscribers. To facilitate conducting a survey in accordance with the present invention, the survey Web server 30 is required to collect information about the subscribers to be stored in the subscriber database 320 in advance. If necessary, the surveyor 10 may provide information about the subscribers.

If the surveyor 10 wishes to make a survey of a number of other subscribers via the internet 20, a Web browser in the surveyor 10 sends a request for Web survey to the survey Web server 30 through the internet 20. At step S1, the document construction block 31 in the survey Web server 30 retrieves the request for Web survey to thereby permit the surveyor 10 an access to the survey Web server 30.

At step S2, the document construction block 31 transmits a plurality of exemplary inquiries to the surveyor 10 via the internet 20. Specifically, the exemplary inquiries stored in the exemplary inquiry database 310 are preferably classified into a number of categories so that a list of categories may be shown to the surveyor 10 without actually transmitting the exemplary inquiries themselves. The categories constitute a scalable structure so that the categories may be refined as a plurality of subcategories.

At step S3, the surveyor 10 determines if one or more categories are there to be selected. If any, the routine goes to step S4 and, if otherwise, the routine goes to step S11.

At step S4, the surveyor 10 selects a category in the list and, at step S5, the document construction block 31 shows the surveyor 10 one or more exemplary inquiries related to the category. At step S6, the surveyor 10 determines if one or more exemplary inquires are there to be selected. If any, the routine goes to step S7 and, if otherwise, the routine goes back to step S2 so that other categories will be further searched.

At step S7, the surveyor 10 selects an exemplary inquiry in the category and, at step S8, the surveyor 10 determines whether the exemplary inquiry is required to be modified or not. In case the exemplary inquiry has one or more solutions to be selected, the solutions can be modified on behalf of the exemplary inquiry.

If the exemplary inquiry is to be modified, the routine goes to step S9, at which the exemplary inquiry is modified, and, then, the routine goes to step S10 sequentially. If not, the routine goes to step S10 directly. At step S10, the exemplary inquiry is registered in the inquiry database 312 as an inquiry related to the surveyor 10. Then, the routine goes back to step S5 so that other inquiries may be further searched.

In the meantime, if there are no more categories to be selected at step S3, at step Sll, the document construction block 31 allows the surveyor 10 to determine whether one or more inquiries are required to be created or not. If required to be created, the routine goes to steps S12, S13 and S14 sequentially and, if not, the routine goes to step S18. At step S18, it is determined whether there are no inquiries to be registered by the surveyor 10. If there is one or more inquires, the routine goes to step S14 and, if otherwise, the routine goes to end.

In the meantime, at step S12, the surveyor 10 creates directly one or more inquiries without using exemplary inquiries and, at step S13, the created inquiries are added in the inquiry database 312 as inquiries related to the surveyor 10.

At step S14, the document construction block 31 generates an HTML document which includes one or more inquiries registered in steps S10 and S12. In the HTML document, a response commission may be attached to each inquiry and, therefore, may also be stored in the inquiry database 312, wherein the response commission will be rewarded to a respondent, i.e., a surveyee who responds to each inquiry.

At steps S15 and S16, the surveyee extraction block 32 extracts surveyees from the subscriber database 320 based on the HTML document. Specifically, at step S15, the surveyee extraction block 32 allows the surveyor 10 to enter requirements on surveyees based on the inquiries of the HTML document, wherein the requirements on surveyees are itemized with, for example, sex, age, occupation, income, residence, hobby and so on. At step S16, the surveyees satisfying the requirements are extracted from the subscriber database 320 and a flag to identify each surveyee is generated.

At step S17, the surveyee extraction block 32 transmits a mail to all the surveyees with the flag so that the surveyee is informed of the existence of the document to be surveyed. The mail is preferably linked with Web sites related to the Web survey server 30 so that the surveyees may respond to the document easily.

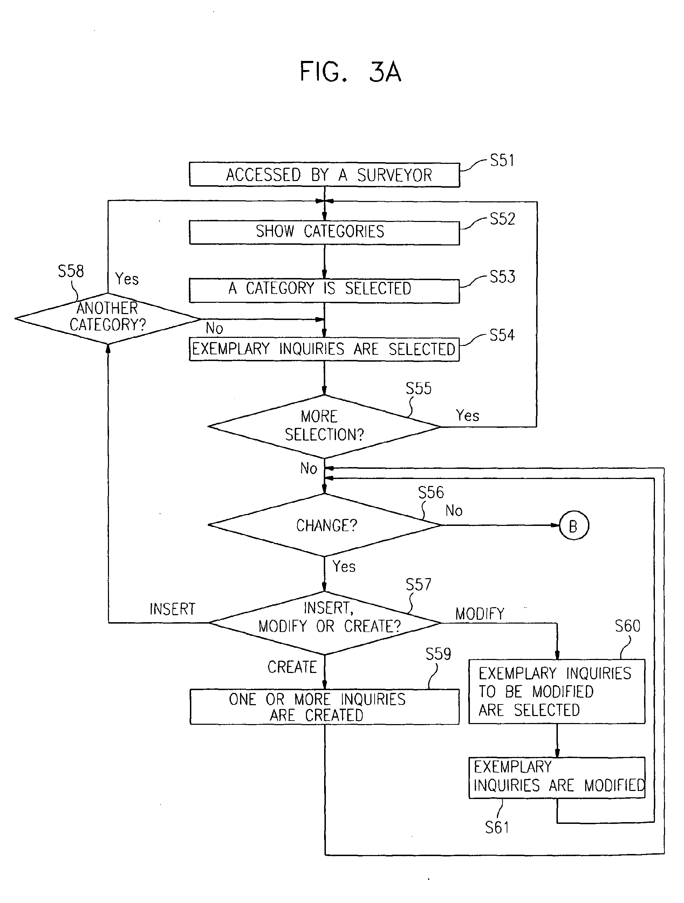

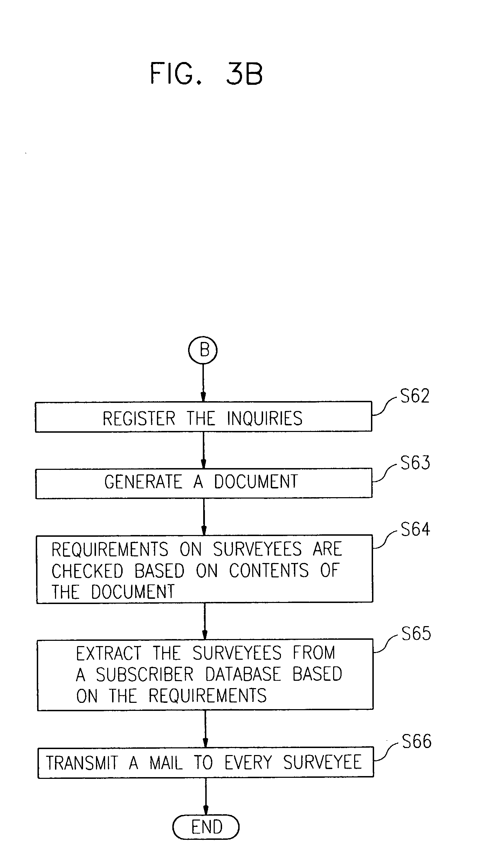

Referring to Figs. 3A and 3B, there shows another flow chart illustrating a routine in which the Web server allows a surveyor 10 to select exemplary inquiries to ask and to extract surveyees based on the selected exemplary inquiries. To conduct a survey in accordance with the present invention, the survey Web server 30 is required to collect information about the subscribers to be stored in the subscriber database 320 in advance.

If the surveyor 10 wishes to survey a number of other subscribers via the internet 20, a Web browser in the surveyor 10 sends a request for Web survey to the survey Web server 30 through the internet 20. At step S51, the document construction block 31 in the survey Web server 30 retrieves the request for Web survey so that the survey Web server 30 may be accessed by the surveyor 10.

At step S52, the document construction block 31 transmits a plurality of exemplary inquiries to the surveyor 10 via the internet 20. Specifically, the exemplary inquiries stored in the exemplary inquiry database 310 are preferably classified into a number of categories so that a list of categories may be shown to the surveyor 10 without transmitting the exemplary inquiries themselves. The categories constitute a hierarchic structure so that the categories may be refined as a plurality of subcategories.

At step S53, the surveyor 10 selects a category in the list and, then, the document construction block 31 shows the surveyor 10 one or more exemplary inquiries related to the category. At step S54, the surveyor 10 selects one or more exemplary inquiries in the category.

At step S55, the surveyor 10 determines if one or more categories are there to be selected. In other words, the document construction block 31 asks the surveyor 10 if the surveyor 10 will select one or more exemplary inquiries. If more exemplary inquiries are required to be selected, the routine goes back to step S52 and, if otherwise, the routine goes to step S56.

At step S56, it is determined if the selected exemplary inquiries are required to be changed. If they are required to be changed, the routine goes to step S57 and, if otherwise, the routine goes to step S62.

At step S57, it is checked if the surveyor 10 wishes to insert another exemplary inquiry, create one or more inquiries by himself or modify one or more exemplary inquiries.

If one or more exemplary inquires are required to be inserted, the routine goes to step S58, at which it is checked whether another category is required or not. If another category is required, the routine goes back to step S52 and, if otherwise, the routine goes back to step S54.

If one or more exemplary inquiries are required to be created, the routine goes to step S59, at which the document construction block 31 allows the surveyor 10 to create one or more inquiries by oneself, and, then the routine goes back to step S56.

If one or more exemplary inquiries are required to be modified, the routine goes to step S60, at which the document construction block 31 allows the surveyor 10 to select one or more exemplary inquires to be modified, and then, at step S61, the document construction block 31 allows the surveyor 10 to modify the selected one or more exemplary inquires. If necessary, the inquiries created at step S59 may also be modified. In case the exemplary inquiry has one or more solutions to be selected, the solutions can be modified on behalf of the exemplary inquiry. Then, the routine goes back to step S56.

In the meantime, at step S62, the inquiries are registered in the inquiry database 312 as inquiries related to the surveyor 10. At step S63, the document construction block 31 generates an HTML document which includes one or more inquiries registered in step 62. In the HTML document, a response commission may be attached to each inquiry and, therefore, may also be stored in the inquiry database 312. At steps S64 and S65, the surveyee extraction block 32 extracts surveyees from the subscriber database 320 based on the HTML document. Specifically, at step S64, the surveyee extraction block 32 allows the surveyor 10 to enter requirements on surveyees based on the inquiries of the HTML document, wherein the requirements on surveyees are itemized with, for example, sex, age, occupation, income, residence, hobby and so on. At step S65, the surveyees satisfying the requirements are extracted from the subscriber database 320 and a flag to identify each surveyee is generated.

At step S66, the surveyee extraction block 32 transmits a mail to all the surveyees with the flag so that the surveyee is informed of the existence of the document to be surveyed. The mail is preferably linked with Web sites related to the Web survey server 30 so that the surveyees may respond to the document easily.

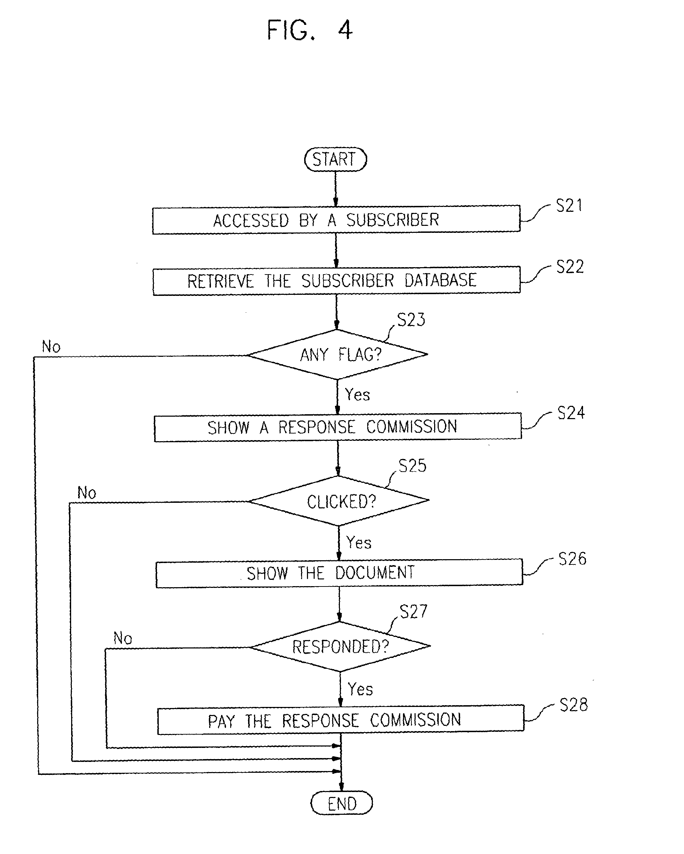

Referring to Fig. 4, there is a flow chart illustrating a routine in which the Web server 30 persuades surveyees to respond to the inquiries.

At step S21, it is assumed that a subscriber has accessed the survey Web server 30. Then, at step S22, the statistics generation block 33 in the survey Web server 30 retrieves the subscriber database 320. At step S23, the statistics generation block 33 investigates if there exist flags related with the subscriber to determine whether the subscriber corresponds to a surveyee for documents to be surveyed. If there exist flags, the routine goes to step S24 and, if otherwise, the routine goes to end.

At step S24, the statistics generation block 33 shows response commissions for inquiries to the surveyee 50. It is preferable that the response commissions are fully shown by clicking a button by the surveyee 50 as incentive for responding to the inquiries. At step S25, it is checked whether or not the button is clicked by the surveyee 50. If clicked, i.e., if the surveyee 50 wants to respond to the document as respondent, the routine goes to S26 and, if otherwise, the routine ends.

At step S26, the statistics generation block 33 shows the inquiries of the document stored in the inquiry database 312 to the surveyee 50 as a type of HTML document. Each inquiry is shown with a commission related thereto. In case an inquiry is responded by selecting one or more exemplary solutions, the inquiry must be given with the exemplary solutions.

At step S27, it is determined whether or not each inquiry is responded by the surveyee 50. If responded, the routine goes to step S28 and, if otherwise, the routine goes to end. At step S28, the statistics generation block 33 updates the survey result and permits the account management block 34 to pay the response commission to the cyber account of the surveyee 50 as incentive.

While the present invention has been described with respect to the particular embodiments, it will be apparent to those skilled in the art that various changes and modifications may be made without departing from the scope of the invention as defined in the following claims.

## Claims

1. A method for conducting an online survey over a network, comprising the steps of:
transmitting a plurality of exemplary inquiries to a remote processing system;
allowing the remote processing system to manipulate said plurality of exemplary inquiries, thereby generating a document including at least one inquiry to be constructed;
permitting the remote processing system to determine requirements on surveyees depending on contents of the document, to thereby at least one remote subscriber among a number of remote subscribers be selected as at least one surveyee; and
persuading said at least one surveyee to respond to the document.

2. The method of claim 1, wherein said allowing step includes the steps of:
selecting at least one exemplary inquiry as said at least one inquiry; and
modifying said at least one inquiry.

3. The method of claim 2, wherein said plurality of exemplary inquires are classified into at least one category.

4. The method of claim 3, wherein said selecting step has the steps of:
choosing a category having one or more exemplary inquiries; and
picking out at least one exemplary inquiry within the category as said at least one inquiry.

5. The method of claim 4, wherein said selecting step further has the step of searching said at least one category to insert at least one exemplary inquiry within another category into the document as said at least one inquiry.

6. The method of claim 1, wherein said allowing step further includes the step of creating another inquiry, which is enclosed by said at least one inquiry of the document.

7. The method of claim 1, wherein said persuading step includes the steps of:
showing said at least one surveyee a response commission as incentive for responding to the document;
providing, if said at least one surveyee intends to respond to the document, the document to said at least one surveyee; and
paying, if said at least one surveyee responds to said at least one inquiry in the document, the response commission to said at least one surveyee through a cyber account thereof.

8. An apparatus for conducting an online survey over a network, comprising:
means for transmitting a plurality of exemplary inquiries to a remote processing system;
means for allowing the remote processing system to manipulate said plurality of exemplary inquiries, thereby generating a document including at least one inquiry to be constructed;
means for permitting the remote processing system to determine requirements on surveyees depending on contents of the document, to thereby at least one remote subscriber among a number of remote subscribers be selected as at least one surveyee;
means for managing at least one account assigned said at least one surveyee.

9. The apparatus of claim 8, wherein said means for allowing selects at least one exemplary inquiry as said at least one inquiry and modifies said at least one inquiry.

10. The apparatus of claim 9, wherein said plurality of exemplary inquires are classified into at least one category; and said means for selecting chooses a category having one or more exemplary inquiries and picks out at least one exemplary inquiry within the category as said at least one inquiry.

11. The apparatus of claim 10, wherein said means for selecting further searches said at least one category to insert at least one exemplary inquiry within another category into the document as said at least one inquiry.

12. The apparatus of claim 8, wherein said means for allowing further creates another inquiry, which is enclosed by said at least one inquiry of the document.

13. The apparatus of claim 8, wherein said means for managing shows said at least one surveyee a response commission for incentive for responding to the document; provides, if said at least one surveyee intends to respond to the. document, the document to said at least one surveyee; and pays, if said at least one surveyee responds to said at least one inquiry in the document, the response commission to said at least one surveyee through a cyber account thereof.
